# EUROPÄISCHE PATENTSCHRIFT

(11) **EP 1 155 380 B1**
(45) Veröffentlichungstag und Bekanntmachung des Hinweises auf die Patenterteilung: **23.04.2003**
(21) Anmeldenummer: 00907541.7
(22) Anmeldetag: 10.02.2000
(51) Int. Cl.: G06K 7/00, G06K 13/08

(54) **VERFAHREN UND VORRICHTUNG ZUM ERMITTELN DER LAGE EINER CHIPKARTE IN EINER KARTENLESEEINRICHTUNG**
METHOD AND DEVICE FOR DETERMINING THE POSITION OF A CHIP CARD IN A CARD READER
PROCEDE ET DISPOSITIF POUR DETERMINER LA POSITION D'UNE CARTE A PUCE DANS UN LECTEUR DE CARTE

(30) Priorität: 25.02.1999 DE 19908161
(43) Veröffentlichungstag der Anmeldung: 21.11.2001
(73) Patentinhaber: Wincor Nixdorf International GmbH, 33106 Paderborn (DE)
(72) Erfinder: VON DER LIPPE, Carsten, D-33102 Paderborn (DE); NEUBAUER, Lutz, D-33181 Wünnenberg-Leiberg (DE)
(74) Vertreter: Schaumburg, Thoenes & Thurn
(86) Internationale Anmeldenummer: EP0001083
(87) Internationale Veröffentlichungsnummer: WO00051061

(56) Entgegenhaltungen:
- FR-A- 2 558 621
- GB-A- 2 095 397
- US-A- 3 763 355
- US-A- 5 668 365

## Beschreibung

Die Erfindung betrifft ein Verfahren zum Ermitteln der Lage einer Chipkarte in einer Kartenleseeinrichtung, wobei der Chip in der Karte exzentrisch angeordnet ist, sowie eine Vorrichtung zur Durchführung dieses Verfahrens.

Wird eine der heute üblichen Chipkarten, die entweder keinen Magnetlesestreifen hat oder deren Magnetlesestreifen nicht beschriftet ist, in ein Kartenlesegerät mit einer Chipkartenkontaktstation eingeführt, kann die Chipkarte vier Stellungen relativ zu der Chipkartenkontaktstation einnehmen. Jedoch fuhrt nur eine Stellung zur erfolgreichen Kontaktierung des Chips, da die Chipkartenkontaktstation nur eine Position auf der Chipkarte erfolgreich kontaktieren kann. Da der Benutzer im allgemeinen nicht erkennen kann, wo sich die geräteseitigen Kontaktelemente befinden, muß er unter Umständen mehrere Versuche unternehmen, bis er herausgefunden hat, in welcher Lage er die Chipkarte in das Kartenlesegerät einführen muß, um eine erfolgreiche Kontaktierung zu gewährleisten.

Aus FR-A-2 558 621, das Karten mit einer Magnetspur offenbart, ist es bereits bekannt, Mittel zur Magnetspurvorerkennung vorzusehen. Damit soll das Einführen von nicht normgerechten Gegenständen und insbesondere eine Manipulation des Lesegerätes verhindert werden. Mit dieser Magnetspurvorerkennung kann ferner u.U. festgestellt werden, daß die aktuelle Einführlage der Karte nicht korrekt ist. Es kann aber nicht festgestellt werden, in welcher Lage sich die Karte tatsächlich befindet und wie der Benutzer folglich die Lage verändern muß, um eine Chipkartenkontaktierung zu ermöglichen.

Der Erfindung liegt die Aufgabe zugrunde, ein Verfahren der eingangs genannten Art anzugeben, mit dem die aktuelle Position der Karte erkannt und gegebenenfalls entschieden werden kann, wie die Lage der Karte verändert werden muß, um sie korrekt in das Kartenlesegerät einführen zu können.

Diese Aufgabe wird erfindungsgemäß dadurch gelöst, daß an den vier möglichen Positionen, an denen sich der Chip, der in die Kartenleseeinrichtung eingeführten Chipkarte, befinden kann, das Vorhandensein der Chipkontaktfläche erfaßt wird.

Mit dem erfindungsgemäßen Verfahren wird also nicht nur festgestellt, daß die Karte falsch herum in die Kartenleseeinrichtung eingeführt wurde, sondern es wird auch erkannt, an welcher Position sich der Chip tatsächlich befindet. Damit ist es möglich, die Lage des Chips und/oder der Chipkarte anzuzeigen und dem Benutzer eine Mitteilung zu geben, wie er die Karte richtig einzuführen hat. Ferner besteht die Möglichkeit, die Lage der Karte oder die Lage der geräteseitigen Kontaktelemente so zu verändern, daß eine korrekte Kontaktierung des Chips möglich ist.

Das Vorhandensein der Chipkontaktfläche kann induktiv, kapazitiv oder über eine Widerstandsmessung durch direkte Kontaktierung der Chipkontaktfläche erfaßt werden.

Zur Durchführung des vorstehend beschriebenen Verfahrens wird eine Vorrichtung zum Ermitteln der Lage einer Chipkarte in der Kartenaufnahme einer Kartenleseeinrichtung vorgeschlagen, bei der gegenüber den vier möglichen Positionen, an denen sich der Chip der in eine Prüfposition innerhalb der Kartenleseeinrichtung eingeführten Karte befinden kann, jeweils ein mit einer Auswerteschaltung verbundener Sensor zum Erfassen des Vorhandenseins der Chipkontaktfläche angeordnet ist. Die Prüfposition kann dabei der Kartenlesestellung entsprechen.

Bei einer ersten Ausführungsform sind die Sensoren jeweils für eine induktive Erfassung des Vorhandenseins der Chipkontaktfläche ausgebildet. Dabei kann jeder Sensor jeweils ein Spulenpaar mit einer auf einer Seite der Chipkartenaufnahme angeordneten Sendespule und einer auf der anderen Seite der Chipkartenaufnahme angeordneten Empfängerspule umfassen, die bezüglich einer Anregungsfrequenz in Serienresonanz gestimmt sind. Die Wechselspannung in der jeweiligen Senderspule induziert in der Empfängerspule eine Wechselspannung. Wenn nun die Chipkontaktfläche zwischen ein solches Spulenpaar gerät, vermindert sich an diesem Sensor der Betrag der empfangenen Wechselspannung. Durch Vergleich der von den vier Sensoren erhaltenen Werte kann dann der Sensor ermittelt werden, in dessen Bereich die Chipkontaktfläche liegt. Damit kann die Lage der Chipkarte in der Kartenaufnahme eindeutig bestimmt werden.

Bei einer anderen Ausführungsform sind die Sensoren jeweils für eine Widerstandsmessung ausgebildet. Diese läßt sich beispielsweise so durchführen, daß jeder Sensor ein Kontaktstiftpaar hat, das in Richtung auf die Chipkarte verstellbar angeordnet ist derart, daß die Kontaktstifte durch die Berührung mit der Chipkontaktfläche galvanisch verbunden werden. Die an den vier Positionen ermittelten Widerstandswerte werden wiederum in der Auswerteschaltung miteinander verglichen, um so die Lage des Chips und damit die Lage der Chipkarte eindeutig zu bestimmen.

Schließlich besteht auch die Möglichkeit, daß die Sensoren jeweils für eine kapazitive Erfassung des Vorhandenseins der Chipkontaktfläche ausgebildet sind, indem beispielsweise jeder Sensor einen Kondensator mit beiderseits der Kartenaufnahme angeordneten Kondensatorflächen hat. Wird nun die Chipkarte zwischen die Platten eingeführt, so ändert sich die Kapazität des jeweiligen Kondensators durch das eingeführte Kartenmaterial. An der Position der Chipkontaktfläche ist diese Änderung jedoch am stärksten.

Zweckmäßigerweise ist die Auswerteschaltung mit einer Anzeigeeinrichtung verbunden, um einem Benutzer beispielsweise die Lage der Karte anzuzeigen bzw. die Maßnahmen, die er ergreifen muß, um die Karte in ihre korrekte Lage zu bringen.

Gegebenenfalls kann die Auswerteschaltung auch mit einer Lagekorrektureinrichtung verbunden sein, um entweder die Lage der Karte in der Kartenaufnahme oder die Lage der Kontaktelemente relativ zur Karte in Abhängigkeit des von den Sensoren ermittelten Ergebnisses zu verändern.

Weitere Merkmale und Vorteile der Erfindung ergeben sich aus der folgenden Beschreibung, welche in Verbindung mit den beigefugten Zeichnungen die Erfindung anhand von Ausfuhrungsbeispielen erläutert. Es zeigen:
- Figur 1: eine schematische Draufsicht auf eine Seite einer Chipkarte, die sich in einer Kartenaufnahme eines Kartenlesegerätes befindet,
- Figur 2: eine schematische Darstellung einer Einrichtung zum induktiven Erfassen der Kartenlage,
- Figur 3: eine schematische Darstellung der Sensoranordnung zur Erfassung der Kartenlage durch Widerstandsmessung und
- Figur 4: eine der Figur 3 entsprechende Darstellung einer Sensoranordnung zur kapazitiven Erfassung der Kartenlage.

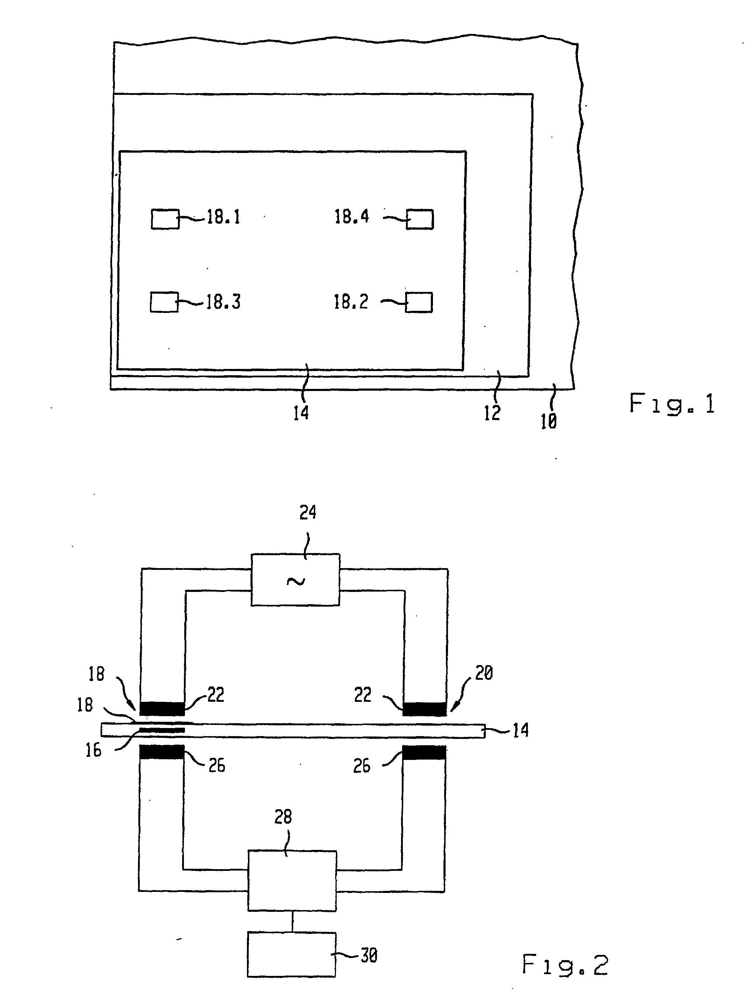

In Figur 1 ist mit 10 ein im übrigen nicht näher dargestelltes Gerät bezeichnet, das einen Aufnahmeschacht 12 für eine Chipkarte 14 hat. In die Chipkarte 14 ist ein Prozessor- oder Speicherbaustein, d.h. ein Chip 16 eingebettet (Figuren 2 bis 4), der über eine an einer Kartenaußenseite angeordnete Chipkontaktfläche 18 mit nicht dargestellten geräteseitigen Gegenkontakten in der Kartenaufnahme 12 in Kontakt treten kann, wenn sich die Chipkarte 14 in der Kartenaufnahme 12 befindet. Bei den meisten Ausführungsformen ist die Lage des Chips gleich der Lage der Chipkontaktfläche, da der Chip zweckmäßig unterhalb der Chipkontaktfläche angeordnet ist.

Nach ISO 7816-1 kann die Chipkontaktfläche 18 vier Positionen auf der Chipkarte 14 einnehmen, die in Figur 1 schematisch dargestellt und mit den Bezugsziffern 18.1 bis 18.4 bezeichnet sind. Die Positionen 18.1 und 18.2 befinden sich dabei auf der dem Betrachter zugewandten Seite der Chipkarte 14, während die mit punktierten Linien dargestellten Positionen 18.3 und 18.4 auf der dem Betrachter abgewandten Seite der Chipkarte 14 liegen. Einer dieser vier Positionen sind die Gegenkontaktelemente des Lesegerätes 10 zugeordnet. Durch Drehen der Karte um eine zu ihr senkrechte Mittelachse oder durch Klappen um ihre Längs- und/oder Querachse können die Positionen 18.1, 18.2 in die Positionen 18.3 bzw. 18.4 überführt werden und vice versa.

Der Benutzer weiß in der Regel nicht, welcher der vier Positionen die Gegenkontaktelemente des Kartenlesegerätes 10 zugeordnet sind, d.h. wie herum er die Chipkarte 14 in die Kartenaufnahme 12 einschieben muß, um einen Kontakt zwischen der Chipkontaktfläche 18 und den Gegenkontaktelementen des Kartenlesegerätes 10 zu erreichen. Sofern an dem Gerät nicht eindeutige Anweisungen gegeben sind, in welcher Lage die Chipkarte 14 in die Kartenaufnahme 12 eingeschoben werden muß, besteht eine hohe Wahrscheinlichkeit, daß der Benutzer erst einmal die Karte in einer falschen Lage in die Kartenaufnahme 12 hineinschiebt. Die in den Figuren 2 bis 4 dargestellten Anordnungen erlauben es, die Lage der eingeschobenen Chipkarte 14 korrekt zu erkennen und gegebenenfalls rasch zu korrigieren, um so eine Mehrzahl von Fehlversuchen zu vermeiden.

Figur 2 zeigt eine Sensoranordnung zum induktiven Erfassen der Position der Chipkontaktfläche 18, die Sensoranordnung hat vier allgemein 20 bezeichnete Sensoren, von denen in Figur 2 nur zwei Sensoren zu sehen sind, da die anderen beiden jeweils verdeckt werden. Jeder Sensor hat eine Sendespule 22, die mit einer Wechselspannungsquelle 24 verbunden ist. Der Sendespule 22 ist eine Empfangsspule 26 zugeordnet, die mit einer Auswerteeinheit 28 verbunden ist. Die Auswerteeinheit 28 ist mit einer Anzeigeeinheit 30 verbunden.

Die Sendespule 22 und die Empfangsspule 26 sind bezüglich der Frequenz der Speisespannung in Serienresonanz gestimmt. Die Wechselspannung in der jeweiligen Sendespule 22 induziert in der Empfangsspule 26 ebenfalls eine Wechselspannung. Wenn nun die Chipkontaktfläche 18 zwischen ein solches Spulenpaar 22, 26 gerät, vermindert sich der Betrag der Wechselspannung an der Empfangsspule 26. Diese Betragsveränderung wird mittels eines Operationsverstärkers in der Auswerteeinheit 28 verstärkt und kann dann durch Vergleich mit den von den anderen Sensoren 20 erhaltenen Signale erkannt und ausgewertet werden. Damit ist es möglich, die Position, in der sich der Chip 16 befindet, und damit auch die Lage der Chipkarte 14 in der Kartenaufnahme 12 eindeutig zu erkennen. Die Lage kann in der Anzeigeeinheit 30 angezeigt werden. Gleichzeitig oder alternativ dazu können in der Anzeigeeinheit 30 Anweisungen für den Benutzer gegeben werden, wie er die Lage der Karte verändern muß, um die Chipkontaktfläche 18 mit den Gegenkontaktelementen in der Kartenaufnahme 12 in Kontakt zu bringen.

Die Überprüfung der Position der Karte 14 in der Kartenaufnahme 12 kann sowohl in der endgültigen Kontaktposition der Karte als auch in einer beliebigen, gegenüber der endgültigen Kontaktposition verschobenen Ruheposition innerhalb der Kartenaufnahme erfolgen.

Es ist zu beachten, daß die notwendige Pegelprüfung der vier Spulenpaare oder Sensoren 20 erst nach Stillstand der Chipkarte 14 erfolgen sollte, da z.B. metallisierte Hologramme, die häufig auf den Chipkarten vorhanden sind, während der Kartenbewegung ebenfalls zur Störspannungen führen können.

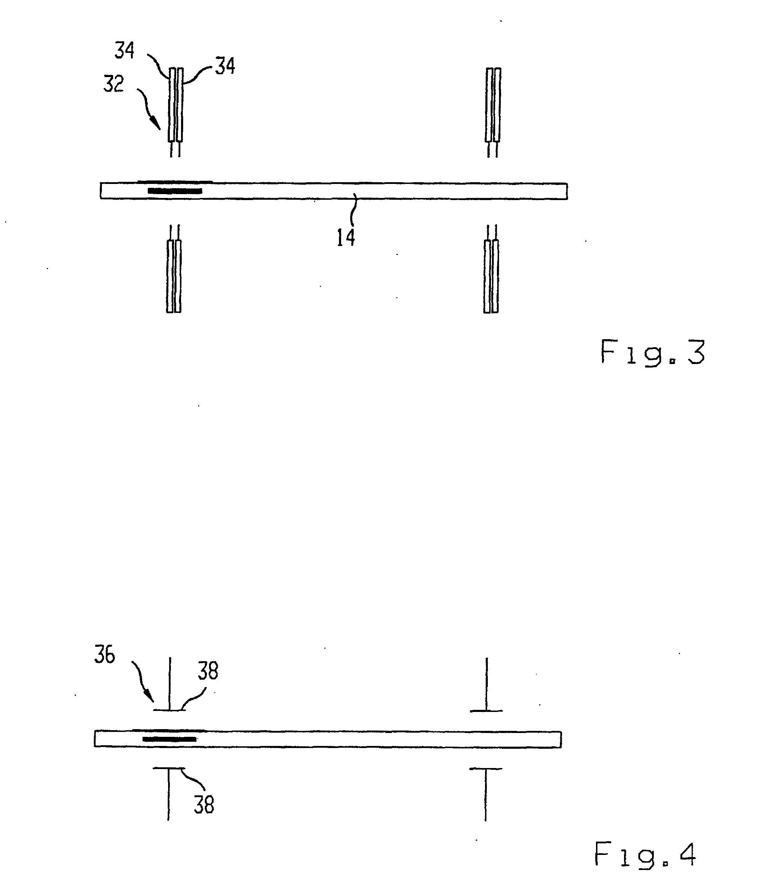

Figur 3 zeigt eine abgewandelte Ausführungsform, bei der jeder Position 18.1 bis 18.4 ein Sensor 32 zugeordnet ist, der aus zwei miteinander durch eine nicht dargestellte Widerstandsmeßschaltung verbundenen Kontaktstiften oder Prüfspitzen 34 besteht. Diese können in Richtung auf die Chipkarte 14, d.h. in Figur 3 nach oben oder unten bewegt werden. Beim Auftreffen der Kontaktstifte 34 auf dem Kunststoffmaterial der Chipkarte wird sich ein hoher Widerstandswert ergeben. Treffen die Kontaktstifte 34 dagegen auf die metallische Chipkontaktfläche 18 wird man einen niedrigen Übergangswiderstand erhalten. Dieser Widerstandswert ist auf vergoldete Flächen abgestimmt und läßt sich so z.B. von dem Widerstandswert metallisierter Hologramme unterscheiden. Durch den Vergleich der an den vier Sensoren 32 gewonnenen Widerstandswerte läßt sich wieder eindeutig die Position der Chipkontaktfläche 18 und des Chips 16 bestimmen und auswerten.

Figur 4 schließlich zeigt eine Sensoranordnung für eine kapazitive Erkennung der Lage des Chips 16 bzw. der Chipkarte 14. Bei dieser Anordnung ist wiederum jeder Position 18.1 bis 18.4 ein Sensor 36 zugeordnet, von denen in Figur 4 nur zwei dargestellt sind. Jeder Sensor 36 stellt einen Kondensator mit zwei Elektroden 38 dar, die beiderseits der Chipkarte 34 angeordnet sind. Durch das Einführen der Chipkarte zwischen die Elektroden 38 der Sensoren 36 verändert sich das Dielektrikum und somit auch die Kapazität der Sensoren 36. An der Position, an der sich die Chipkontaktfläche 18 befindet, ist diese Änderung jedoch am stärksten. Durch Vergleich mit den übrigen Sensoren kann wiederum die Position des Chips 16 erfaßt und auf der Anzeigeeinrichtung 30 angezeigt werden. Auch bei dieser Ausführungsform ist dafür Sorge zu tragen, daß eine Kapazitätsänderung, die von metallisierten Hologrammen herrührt, erkannt wird.

### Bezugszeichenliste

- 10: Kartenlesegerät
- 12: Aufnahmeschacht
- 14: Chipkarte
- 16: Chip
- 18: Chipkontaktfläche
- 18.1 - 18.4: Chippositionen
- 20: Sensor
- 22: Sendespule
- 24: Wechselspannungsquelle
- 26: Empfangsspule
- 28: Auswerteeinheit
- 30: Anzeigeeinheit
- 32: Sensor
- 34: Kontaktstifte
- 36: Sensor
- 38: Elektroden

## Patentansprüche

1. Verfahren zum Ermitteln der Lage einer Chipkarte (14) in der Kartenaufnahme (12) einer Kartenleseeinrichtung (10), wobei die Chipkontaktfläche (18) auf der Karte (14) exzentrisch angeordnet ist, **dadurch gekennzeichnet, daß** an den vier möglichen Positionen (18.1 bis 18.4), an denen sich die Chipkontaktfläche (18) der in die Kartenaufnahme (12) eingeführten Karte (14) befinden kann, das Vorhandensein der Chipkontaktfläche (18) erfaßt wird.

2. Verfahren nach Anspruch 1, **dadurch gekennzeichnet, daß** das Vorhandensein der Chipkontaktfläche (18) induktiv erfaßt wird.

3. Verfahren nach Anspruch 1, **dadurch gekennzeichnet, daß** das Vorhandensein der Chipkontaktfläche (18) kapazitiv erfaßt wird.

4. Verfahren nach Anspruch 1, **dadurch gekennzeichnet, daß** das Vorhandensein der Chipkontaktfläche (18) über eine Widerstandsmessung erfaßt wird.

5. verfahren nach einem der Ansprüche 1 bis 4, **dadurch gekennzeichnet, daß** die Lage die Chipkontaktfläche (18) und/oder der Chipkarte (14) angezeigt wird.

6. Verfahren nach einem der Ansprüche 1 bis 5, **dadurch gekennzeichnet, daß** die Lage der Chipkarte (14) in der Kartenaufnahme (12) selbsttätig korrigiert wird.

7. Verfahren nach einem der Ansprüche 1 bis 5, **dadurch gekennzeichnet, daß** die Chipkontaktelemente der Kartenleseeinrichtung (10) auf die aktuelle Lage der Chipkarte (14) in Abhängigkeit der ermittelten Chiplage eingestellt werden.

8. Vorrichtung zum Ermitteln der Lage einer Chipkarte (14) in der Kartenaufnahme (12) einer Kartenleseeinrichtung (10), wobei die Chipkontaktfläche (18) auf der Karte (14) exzentrisch angeordnet ist, **dadurch gekennzeichnet, daß** gegenüber den möglichen vier Positionen (18.1 bis 18.4), an denen sich die Chipkontaktfläche (18) der in eine Prüfposition innerhalb der Kartenleseeinrichtung (10) eingeführten Karte (14) befinden kann, jeweils ein mit einer Auswerteeinheit (28) verbundene Sensor (20, 32, 36) zum Erfassen der Chipkontaktfläche (18) angeordnet ist.

9. Vorrichtung nach Anspruch 8, **dadurch gekennzeichnet, daß** die Prüfposition die Kartenlesestellung ist.

10. Vorrichtung nach Anspruch 8 oder 9, **dadurch gekennzeichnet, daß** die Sensoren (20) jeweils für eine induktive Erfassung des Vorhandenseins der Chipkontaktfläche (18) ausgebildet sind.

11. Vorrichtung nach Anspruch 10, **dadurch gekennzeichnet, daß** jeder Sensor (20) jeweils ein Spulenpaar mit einer auf einer Seite der Kartenaufnahme (12) angeordneten Sendespule (22) und einer auf der anderen Seite der Kartenaufnahme (12) angeordneten Emfängerspule (24) umfaßt, die bezüglich einer Anregungsfrequenz in Serienresonanz gestimmt sind.

12. Vorrichtung nach Anspruch 8 oder 9, **dadurch gekennzeichnet, daß** die Sensoren (32) jeweils für eine Widerstandsmessung ausgebildet sind.

13. Vorrichtung nach Anspruch 12, **dadurch gekennzeichnet, daß** jeder Sensor (32) ein Kontaktstiftpaar (34) hat, das in Richtung auf die Karte (14) verstellbar angeordnet ist, derart, daß die Kontaktstifte (34) durch die Chipkontaktfläche (18) galvanisch verbindbar sind.

14. Vorrichtung nach Anspruch 8 oder 9, **dadurch gekennzeichnet, daß** die Sensoren (36) jeweils für eine kapazitive Erfassung des Vorhandenseins der Chipkontaktfläche (18) ausgebildet sind.

15. Vorrichtung nach Anspruch 14, **dadurch gekennzeichnet, daß** jeder Sensor (36) einen Kondensator mit beiderseits der Kartenaufnahme (12) angeordneten Kondensatorflächen (38) hat.

16. Vorrichtung nach einem der Ansprüche 8 bis 15, **dadurch gekennzeichnet, daß** die Auswerteeinheit (28) mit einer Anzeigeeinheit (30) verbunden ist.

17. Vorrichtung nach einem der Ansprüche 8 bis 16, **dadurch gekennzeichnet, daß** die Auswerteeinheit (28) mit einer Lagekorrektureinrichtung verbunden ist.

## Claims

1. A method for determining the position of a chip card (14) in the card receiver (12) of a card reader (10), wherein a chip contact surface (18) is arranged eccentrically on the card (14), **characterized in that** at the four possible positions (18.1 - 18.4) which the chip card contact surface (18) of a card (14) inserted into the card receiver (12) can take, the presence of the chip contact surface (18) is determined.

2. The method according to claim 1, **characterized in that** the presence of the chip contact surface (18) is inductively determined.

3. The method according to claim 1, **characterized in that** the presence of the chip contact surface (18) is capacitively determined.

4. The method according to claim 1, **characterized in that** the presence of the chip contact surface (18) is determined by a resistance measurement.

5. The method according to claims 1 to 4, **characterized in that** the position of the chip contact surface (18) and/or the orientation of the chip card (14) is indicated.

6. The method according to one of claims 1 to 5, **characterized in that** the position of the chip card (14) in the card receiver (12) is automatically corrected.

7. The method according to one of claims 1 to 5, further **characterized in that** the chip contact elements of the card reader (10) are adjusted to the actual position of the chip card (14) in dependence on the determined chip position.

8. An apparatus for determining the position of a chip card (14) in the card receiver (12) of a card reader (10), wherein a chip contact surface (18) is arranged eccentrically on the card (14), **characterized in that** opposite each of the possible four positions (18.1 - 18.4), at which the chip contact surface (18) of a card (14) can be located, when it is inserted into the card reader (10) to a test position, a sensor (20, 32, 36) connected with an evaluation unit (28) is provided for recognizing the chip contact surface (18).

9. The apparatus according to claim 8, **characterized in that** the test position is the card reading position.

10. The apparatus according to claim 8 or 9, **characterized in that** the sensors (20) are each formed to provide an inductive recognition of the presence of the chip contact surface (18).

11. The apparatus according to claim 10, further **characterized in that** each sensor (20) includes a coil pair with one coil being a transmitting coil (22) located on one side of the card receiver (12) and with the other coil being a detecting coil (24) located on the other side of the card receiver (12), which coils are in series resonance with respect to an exciting frequency.

12. The apparatus according to claim 8 or 9, **characterized in that** the sensors (32) are each formed to make a resistance measurement.

13. The apparatus of claim 12, **characterized in that** each sensor (32) has a contact pin pair (34) which are adjustable in the direction toward the card (14) so that the contact pins (34) can be brought into galvanic connection by the chip contact surface (18).

14. The apparatus according to claim 8 or 9, **characterized in that** the sensors (36) are each formed to provide a capacitive recognition of the presence of the chip contact surface (18).

15. The apparatus according to claim 14, **characterized in that** each sensor (36) has a capacitor with capacitor surfaces (38) arranged on both sides of the card receiver (12).

16. The apparatus according to one of claims 8 to 15, **characterized in that** the evaluation unit (28) is connected with an indicating device (30).

17. The apparatus according to one of claims 8 to 16, **characterized in that** the evaluation unit (28) is connected with a position-correcting device.

## Revendications

1. Procédé de détermination de la position d'une carte (14) à puce dans le logement (12) pour une carte d'un dispositif (10) de lecture de carte, la surface (18) de contact de la puce étant disposée de manière excentrée sur la carte (14), **caractérisé en ce que** l'on détecte la présence de la surface (18) de contact de la puce aux quatre positions (18.1 à 18.4) possibles auxquelles la surface (18) de contact de la puce de la carte (14) introduite dans le logement (12) pour la carte peut se trouver.

2. Procédé suivant la revendication 1, **caractérisé en ce que** l'on détecte la présence de la surface (18) de contact de la puce par induction.

3. Procédé suivant la revendication 1, **caractérisé en ce que** l'on détecte la présence de la surface (18) de contact de la puce par voie capacitive.

4. Procédé suivant la revendication 1, **caractérisé en ce que** l'on détecte la présence de la surface (18) de contact de la puce par une mesure de résistance.

5. Procédé suivant l'une des revendications 1 à 4, **caractérisé en ce que** l'on affiche la position de la surface (18) de contact de la puce et/ou de la carte (14) à puce.

6. Procédé suivant l'une des revendications 1 à 5, **caractérisé en ce que** l'on corrige automatiquement la position de la carte (14) à puce dans le logement (12) pour la carte.

7. Procédé suivant l'une des revendications 1 à 5, **caractérisé en ce que** l'on règle les éléments de contact de la puce du dispositif (10) de lecture de carte sur la position du moment de la carte (14) à puce en fonction de la position de la puce qui a été détectée.

8. Dispositif de détermination de la position d'une carte (14) à puce dans le logement (12) pour la carte d'un dispositif (10) de lecture de carte, la surface (18) de contact de la puce étant disposée d'une manière excentrée sur la carte (14), **caractérisé en ce qu'**il est disposé, en regard des quatre positions (18.1 à 18.4) possibles auxquelles surface (18) de contact de la puce de la carte (14) introduite dans une position de contrôle à l'intérieur du dispositif (10) de lecteur de carte peut se trouver, respectivement un capteur (20, 32, 36) qui est relié à une unité (28) d'exploitation et qui est destiné à détecter la surface (18) de contact de la puce.

9. Dispositif suivant la revendication 8, **caractérisé en ce que** la position de contrôle est la position de lecture de la carte.

10. Dispositif suivant la revendication 8 ou 9, **caractérisé en ce que** les capteurs (20) sont constitués respectivement pour une détection par induction de la présence de la surface (18) de contact de la puce.

11. Dispositif suivant la revendication 10, **caractérisé en ce que** chaque capteur (20) comprend respectivement une paire de bobines ayant une bobine (22) d'émission disposée d'un côté du logement (12) pour la carte et une bobine (24) de réception disposée de l'autre côté du logement (12) pour la carte qui sont accordées en ce qui concerne une fréquence d'excitation en résonance série.

12. Dispositif suivant la revendication 8 ou 9, **caractérisé en ce que** les capteurs (39) sont constitués respectivement pour une mesure de résistance.

13. Dispositif suivant la revendication 12, **caractérisé en ce que** chaque capteur (32) a une paire (34) de broches de contact qui sont disposées réglables en direction sur la carte (14), de façon à ce que les broches (34) de contact puissent être reliées galvaniquement par la surface (18) de contact de la puce.

14. Dispositif suivant la revendication 8 ou 9, **caractérisé en ce que** les capteurs (36) sont constitués respectivement pour une détection capacitive de la présence de la surface (18) de contact de la puce.

15. Dispositif suivant la revendication 14, **caractérisé en ce que** chaque capteur (36) a un condensateur ayant des surfaces (38) de condensateur disposées de part et d'autre du logement (12) pour la carte.

16. Dispositif suivant l'une des revendications 8 à 15, **caractérisé en ce que** l'unité (28) d'exploitation est reliée à une unité (30) d'affichage.

17. Dispositif suivant l'une des revendications 8 à 16, **caractérisé en ce que** l'unité (28) d'exploitation est reliée à une unité de correction de position.
